# EUROPEAN PATENT SPECIFICATION

(11) **EP 2 337 240 B1**
(45) Date of publication and mention of the grant of the patent: **11.11.2015**
(21) Application number: 09290945.6
(22) Date of filing: 15.12.2009
(51) Int. Cl.: H04J 14/02, G01M 11/00, H04B 10/071

(54) **Multichannel WDM-PON module with integrated OTDR function**
Mehrkanaliges, passives optisches Wellenlängen-Multiplex-Netzwerk (WDM-PON) mit integrierter Funktion zur optischen Zeitbereichsreflektometrie (OTDR)
Module WDM-PON multicanaux avec fonction OTDR intégrée

(43) Date of publication of application: 22.06.2011
(73) Proprietor: ALCATEL LUCENT, 92100 Boulogne-Billancourt (FR)
(72) Inventor: Pfeiffer, Thomas, 70569 Stuttgart (DE); Rush, Allen, 07041 Millburn, New Jersey (US)
(74) Representative: Wetzel, Emmanuelle

(56) References cited:
- EP-A1- 1 758 279
- EP-A2- 0 546 707
- US-B1- 7 042 559
- US-B1- 7 630 641
- CHUAN N B ET AL: "Lightwave measurement and characterization in passive optical network (PON)" SPACE SCIENCE AND COMMUNICATION, 2009. ICONSPACE 2009. INTERNATIONAL CONFERENCE ON, IEEE, PISCATAWAY, NJ, USA, 26 October 2009 (2009-10-26), pages 56-61, XP031579838 ISBN: 978-1-4244-4956-9
- FIBOTECH: "increasing performance of low-price fibre test equipment creates more applications", INTERNET CITATION, 1 February 2004 (2004-02-01), pages 1-2, XP003032902, Retrieved from the Internet: URL:http://www.intercomms.net/FEB04/conten t/fibotec.php [retrieved on 2013-11-01]
- K.W. Lim ET AL: "Fault localization in WDM passive optical network by reusing downstream light sources", IEEE PHOTONICS TECHNOLOGY LETTERS., vol. 17, no. 12, 1 December 2005 (2005-12-01), pages 2691-2693, XP055137840, US ISSN: 1041-1135, DOI: 10.1109/LPT.2005.859178

## Description

The present document relates to passive optical networks (PON). In particular, it relates to the cost efficient provisioning of an OTDR (optical time-domain reflectometer) into multichannel Wavelength Division Multiplexing-PON (WDM-PON) modules.

An optical time-domain reflectometer (OTDR) is an optoelectronic instrument used to characterize an optical fiber. An OTDR injects test patterns, e.g. a single pulse or a series of optical pulses, into the fiber under test and extracts, from the same end of the fiber, light that is backscattered along the fiber link or reflected back from points in the fiber where the index of refraction changes. The backscattered signal may be analyzed and provides information on possible faults, such as breaks, and other properties of the fiber under test. An OTDR may also be used for estimating the fiber's length and overall attenuation, including splice and connector losses.

EP0546707A2 describes a passive optical communication network comprising OTDR. EP1758279A1 describes a system for monitoring an optical communication system, e.g. a WDM system. K.W. Lim et al., "Fault localization in WDM passive optical network by reusing downstream light sources", IEEE Photonics Technology Letters, vol. 17, no. 12, 1 Dec. 2005, pages 2691-2693, describes a method for detecting fiber failures in WDM passive optical networks.

Wavelength Division Multiplexing PON (WDM-PON) is currently under investigation for increasing the capacity of PON systems. The multiple wavelengths of a WDM-PON can be used to separate individual or groups of Optical Network Units (ONUs) into several virtual PONs co-existing on the same physical infrastructure. Typically, one wavelength of the WDM system is used for the downstream communication from a central office OLT (optical line terminal) to one or more ONUs, and another wavelength of the WDM system is used for the upstream communication from the one or more ONUs to the OLT. The downstream and upstream communication may be performed on the same or on separate fibers.

In order to monitor the quality of the one or more optical fibers used in such WDM-PON systems and in order to monitor the quality of the different optical transmission channels, it would be beneficial to provide an efficient and cost-effective embedded OTDR functionality for WDM-PON systems.

According to an aspect a WDM-PON transmitter and/or a transceiver module configured to analyze an optical fiber is described. In the following, reference is made to a transmitter, but the aspects should also apply to a transceiver module. In particular, the WDM-PON transmitter may be configured to determine discontinuities of the refractive index of the optical fiber. The transmitter may comprise a plurality of light sources, e.g. lasers, configured to respectively generate a plurality of optical signals at different wavelengths. Furthermore, the transmitter may comprise a merging or multiplexing unit configured to combine the plurality of optical signals for transmission over the optical fiber. The multiplexing unit may be implemented as a power combiner and/or a wavelength multiplexer. As such, the WDM-PON transmitter may be configured to transmit optical signals over a plurality of wavelengths using a single optical fiber.

The WDM-PON transmitter may comprise a tapping unit downstream of the multiplexing unit configured to extract a backscattered optical signal from the fiber. The tapping unit may be implemented as an optical power splitter. It may be configured to extract a pre-determined fraction, e.g. 10%, of the backscattered optical signal from the fiber.

Furthermore, the transmitter may comprise analysis means configured to analyze the backscattered optical signal. The analysis means may comprise a control and analysis unit configured to initiate the generation of an electrical test signal and/or receive an electrical response signal. The response signal may be associated with the test signal. Furthermore, the control and analysis unit may be configured to determine information associated with the fiber based on the electrical test signal and the electrical response signal. In an embodiment, the transmitter comprises one single control and analysis unit.

The transmitter may further comprise an optical receiver configured to convert the backscattered optical signal into an electrical response signal, which is e.g. passed to the control and analysis unit. In an embodiment, the transmitter comprises one single optical receiver for the backscattered light of the optical fiber.

The WDM-PON transmitter may further comprise a test pattern scheduling unit configured to generate an electrical test signal and to pass the test signal to the plurality of light sources by means of at least one test pattern insertion unit. In an embodiment, the transmitter comprises one single test pattern scheduling unit which passes the test signal to the plurality of light sources. This may be performed by means of a plurality of test pattern insertion units, e.g. modulators, associated with the plurality of light sources, respectively. The test pattern insertion units may be configured to merge the test signal with a data signal which is to be transmitted via a light source over the optical fiber. In particular, the transmitter may comprise a plurality of data signal units configured to provide a plurality of electrical data signals which are to be transmitted using the plurality of optical signals, respectively. One or more test pattern insertion units may be configured to modulate at least one of the plurality of electrical data signals with the test signal.

The test signal may comprise at least one pulse and the response signal may be associated with a pulse response of the fiber to the at least one pulse. This pulse response may be used to determine information associated with the fiber, e.g. information on a location in the fiber with changed refractive index.

The test pattern scheduling unit may be configured to sequentially pass the test signal to each of the plurality of light sources and the control and analysis unit may be configured to receive a plurality of response signals respectively, associated with the test signal passed to the plurality of light sources. Alternatively or in addition, the test pattern scheduling unit may be configured to simultaneously pass the test signal to each of the plurality of light sources and the control and analysis unit may be configured to receive a response signal associated with the test signal passed to the plurality of light sources.

According to a further aspect, a WDM-PON network is described. The network may comprise a WDM-PON transmitter comprising any of the aspects outlined in the present document. In particular, the WDM-PON transmitter may be configured to transmit a plurality of optical signals at different wavelengths. The network may comprise a feeder fiber, a plurality of drop fibers, and a plurality of optical network units, referred to as ONUs, connected to the feeder fiber via the plurality of drop fibers, respectively. The plurality of ONUs may be configured to respectively receive the plurality of optical signals at different wavelengths. The WDM-PON transmitter may be configured to determine information on a location with changed refractive index in one of the plurality of drop fibers.

According to another aspect, a method for analyzing an optical fiber of a WDM-PON network is described. The method may comprise generating a plurality of optical signals at different wavelengths; combining the plurality of optical signals for transmission over the optical fiber using a merging unit; extracting a backscattered optical signal from the fiber using a tapping unit downstream of the multiplexing unit; and analyzing the backscattered optical signal.

It should be noted that the above mentioned aspects may be combined with one another or extracted from one another in various ways. In particular, all possible claim and feature combinations are considered to be disclosed by the present document. Furthermore, the aspects and features outlined in relation with a system are equally applicable in relation to the corresponding method.

The objects and features of the invention will become apparent from the following description of examples. The present invention is described in the following by referring to exemplary embodiments illustrated schematically in the accompanying figures, wherein
Fig. 1 illustrates an example WDM-PON architecture;
Fig. 2a shows an exemplary WDM-PON transmitter comprising an OTDR;
Fig. 2b shows an exemplary WDM-PON transceiver module comprising an OTDR; and
Fig. 3 illustrates an example modulated transmitted signal and a corresponding OTDR pulse response.

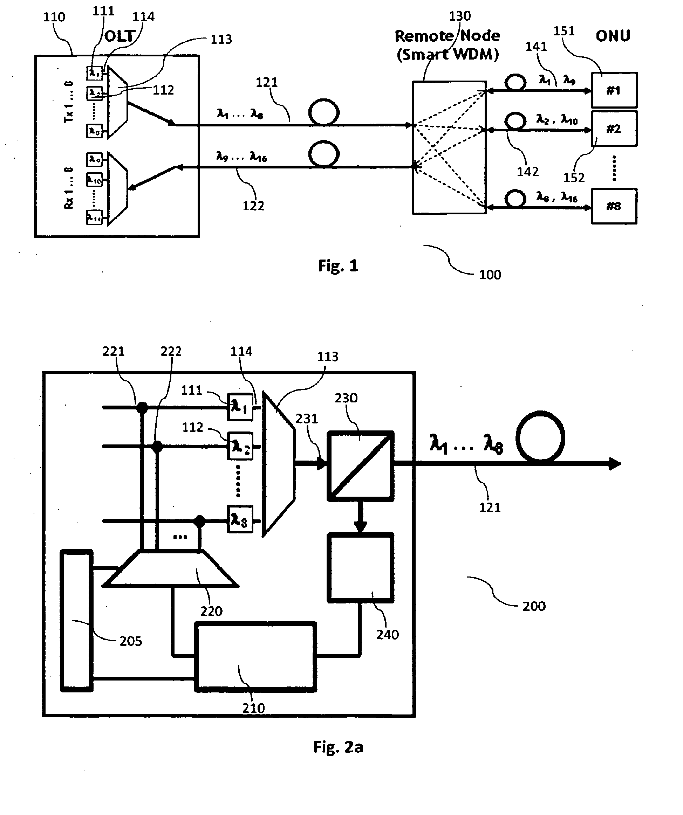

Fig. 1 shows a WDM-PON network 100 comprising an optical line terminal (OLT) 110 and a plurality of optical network units (ONU) 151, 152. In the shown example the network comprises two feeder fibers 121, 122, wherein the first feeder fiber 121 carries the downstream wavelengths λ₁, ..., λ₈ and the second feeder fiber 122 carries the upstream wavelengths λ₉, ..., λ₁₆. Using a remote node 130, the wavelengths are assigned to particular ONUs 151, 152. Each ONU 151, 152 is connected to the remote node 130 via a drop fiber 141, 142. In the illustrated example, the wavelengths λ₁ and λ₉ are assigned to a first ONU 151 and the wavelengths λ₂ and λ₁₀ are assigned to a second ONU 152. As such, a WDM-PON network is shown, where each ONU 151, 152 is assigned a dedicated wavelength for the downstream and the upstream communication. In other words, each ONU 151 has a unique set of wavelengths λ₁ and λ₁₀ for the downstream and upstream communication, respectively.

It should be noted that a WDM-PON may also make use of the broadcasting functionality on the downstream channel and the TDMA (time division multiple access) multiplexing scheme on the upstream channel known from PON systems, e.g. GPON systems. As such, several ONUs 151, 152 may use the same set of wavelengths λ₁ and λ₁₀ for the downstream and upstream communication.

Regardless the particular configuration of the WDM-PON network architecture, it is desirable to obtain information on the condition of the feeder fibers 121, 122 and/or on the drop fibers 141, 142. Such information may be determined using optical time-domain reflectometers (OTDRs) for the different wavelengths λ₁,...,λ₈. In particular, a dedicated OTDR circuit may be associated with each laser 111, 112 of the OLT 110. Using the dedicated OTDR circuit of laser 111, a optical pulse or an optical pulse pattern of a certain wavelength λ₁ is inserted into the fiber 121 via a WDM merging/splitting unit 113. The backscattered light corresponding to the wavelength λ₁ could be extracted at a point 114 between the laser 111 and the WDM merging/splitting unit 113. The extracted backscattered light would then be input into the OTDR for analysis of the fiber conditions. This scenario would allow for the use of combined laser/OTDR components. On the other hand, it would require the use of multiple OTDRs, one for each WDM wavelength. This leads to a considerable cost increase which should be avoided when providing OTDR testing functionality in the context of WDM-PON.

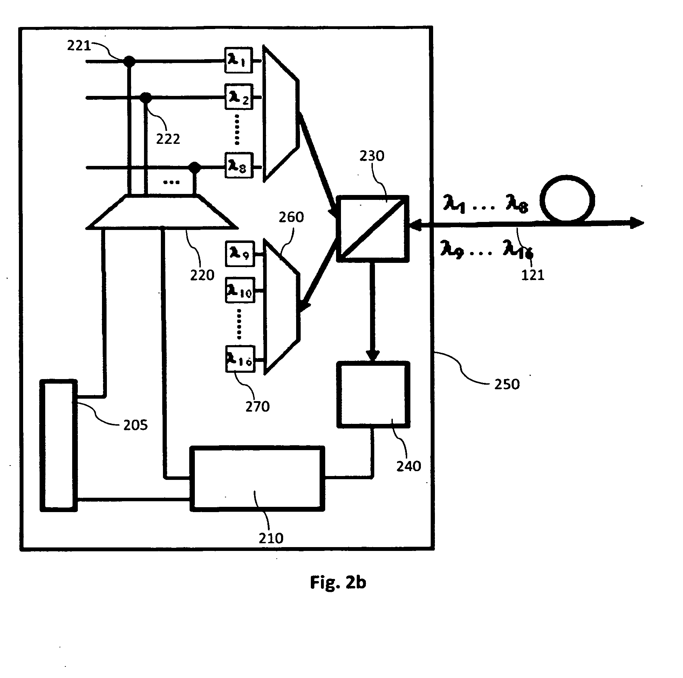

An exemplary cost effective setup for an OLT transmitter 200 comprising a OTDR functionality is shown in Fig. 2a. The OLT transmitter 200 comprises a plurality of lasers 111, 112, each configured to generate a wavelength λ₁,...,λ₈ for WDM transmission. Furthermore, the OLT transmitter 200 comprises a WDM merging/splitting unit 113 which is configured to merge the different wavelengths λ₁,...,λ₈ onto a single fiber 121. The merging/splitting unit 113 may be implemented as a power combiner and/or power splitter which passively combines and/or splits the optical power of the different wavelengths λ₁,...,λ₈. Alternatively, the merging/splitting unit 113 may be implemented as an wavelength routing multiplexer and/or de-multiplexer. Typically, a merging/splitting unit 113 based on an active wavelength routing multiplexer and/or de-multiplexer involves a reduced loss of signal power compared to a merging/splitting unit 113 based on a passive power combiner and/or power splitter.

Furthermore, the OLT transmitter 200 comprises a single OTDR control and analysis unit 210, which may be implemented using a single ASIC (application specific integrated circuit). This OTDR control and analysis unit 210 may be in communication with a controller 205 of the OLT transmitter 200, in order to synchronize with the overall operation of the OLT transmitter 200. The OTDR control and analysis unit 210 is configured to schedule the OTDR measurement cycles. For controlling the measurements, the OTDR control and analysis unit 210 may make use of a test pattern scheduling unit 220 which is configured to control the generation of the transmitted optical test pulse and/or test pattern. Depending on the wavelength λ₁, ..., λ₈ which is to be tested, an electrical test pattern is generated and forwarded to the respective laser 111, 112.

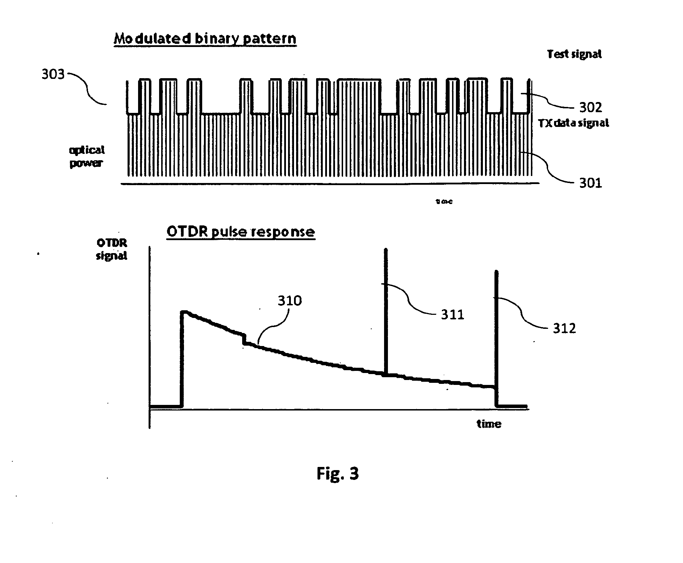

A test pattern may be a sequence of pulses at a certain frequency or bitrate. The bitrate is typically low compared to the optical WDM data channel bitrate associated with the respective wavelength λ₁,...,λ₈. Typically, the bitrate of the test pattern pulses is in the range of Mbit/s, whereas the optical data channel bitrate is in the range of Gbit/s. The test pattern may correspond to pseudo-noise (PN) which is also referred to as a pseudo noise pattern (PNP). As shown in Fig. 3, the test pattern 302 may be superimposed onto the data signal 301 which is to be transmitted over the optical transmission channel. As a result of the superposition, a modulated data signal 303 is obtained. Typically, the data signal 301 is internsity modulated by the test pattern 302. The modulation index is selected to be around 5% to 10%, thereby yielding only a small amplitude modulation of the modulated data signal 303.

The modulation of the data signal 301 by the test pattern is performed in the test pattern insertion unit 221, 222. It can be seen in Fig. 2a that the OLT transmitter 200 comprises a test pattern insertion unit 221, 222 for each transmitting WDM channel. It should be noted that alternative embodiments of the test pattern insertion unit 221, 222 exist. By way of example, the data signal 301 and the test pattern 302 may be added. Furthermore, the test pattern 302 may be inserted solely during silence periods or off periods of the data signal 301.

The test pattern insertion unit 221, 222 inserts an electrical test pattern 302 which is converted into an optical signal at a certain wavelength λ₁, λ₂ by the laser 111, 112 of the respective WDM channel. Subsequently, the optical signal is combined with other wavelengths in the merging/splitting unit 113 and transmitted over the fiber 121.

As a result of discontinuities of the refractive index in the fiber 121 and in subsequence network components, e.g. the remote node 130 and/or the drop fibers 141, 142, light is scattered back to the OLT transmitter 200. In order to extract the backscattered light from the optical fiber 121, the OLT transmitter 200 comprises an optical tapping unit 230. The tapping unit 230 is positioned on the common feeder path 231 within the OLT transmitter 200, i.e. between the merging/splitting unit 113 and the feeder fiber 121. As such, only a single tapping unit 230 is required for the different wavelengths λ₁,...,λ₈. This is advantageous over a positioning of the tapping unit 230 between the lasers 111, 112 and the merging/splitting unit 113, i.e. at the position indicated by reference sign 114, where a separate tapping unit 230 would be required for each wavelength λ₁,...,λ₈. Furthermore, the positioning of the tapping unit 230 downstream of the merging/splitting unit 113 allows for a simplified implementation of the merging/splitting unit 113 as a pure power combiner or wavelength multiplexer, without a power splitting or wavelength demultiplexing functionality.

The tapping unit 230 may be implemented as a power splitter, separating a certain amount of the backscattered light from the fiber 121. Typically about 10% of the optical power is tapped at the tapping unit 230.

The extracted backscattered light is passed from the tapping unit 230 to a single OTDR receiver 240 which is configured to convert the received optical signal into an electrical signal. Typically, the OTDR receiver 240 comprises one or more photodiodes for this purpose. It should be noted that in a similar manner to the tapping unit 230, the described extraction of the backscattered light downstream of the merging/splitting unit 113 is advantageous as only a single OTDR receiver 240 is required for the plurality of transmitting WDM channels.

The electrical received OTDR signal is passed to the OTDR control and analysis unit 210 which is configured to analyze the received OTDR signal and thereby determine information on the condition of the optical path. In particular, an OTDR pulse response 310 as shown in Fig. 3 may be determined. This pulse response 310 may be determined by analyzing the transmitted test pattern and the corresponding received OTDR signal which is associated with the backscattered light. Signal components of the received OTDR signal which are due to the backscattered light of the transmitted data signal 301 should be removed. Typically, a pulse response is determined for each pulse comprised in the test pattern 301. Eventually, an average pulse response is determined by averaging the pulse response for the different pulses of the test pattern 301. The exemplary OTDR pulse response 310 of Fig. 3 comprises distinct peaks 311, 312 at certain time instances. The time instances at which these peaks 311, 312 appear provide an indication on the location of a backscattering event, e.g. a discontinuity in the refractive index caused by a fiber cut.

It should be noted that the use of a single OTDR control and analysis unit 210 for the different wavelengths λ₁, ..., λ₈ allows for the implementation of various modes of operation of the OTDR. The OTDR testing of the different WDM channels may be performed sequentially in a round robin manner. In such cases, the test pattern scheduling unit 220 is configured to sequentially insert the OTDR test pattern on the different WDM channels. By using this mode of operation unique test results can be determined for each WDM wavelength λ₁, ..., λ₈. This may be particularly useful if the different WDM wavelengths λ₁, ..., λ₈ are partially transmitted over different fiber paths as shown e.g. in Fig. 1. It can be seen in Fig. 1 that the wavelength λ₁ is transmitted over drop fiber 141, wherein the wavelength λ₂ is transmitted over drop fiber 142. By performing separate OTDR tests for the different wavelengths, fiber deteriorations on the drop fibers 141, 142 can be uniquely identified.

The OTDR testing may also be performed simultaneously for all WDM channels. In such cases, test pattern scheduling unit 220 may be configured to simultaneously insert the OTDR test pattern onto all transmitting WDM channels. This may be advantageous as the power budget for the OTDR test can be improved. As a matter of fact, the losses which are typically incurred in the merging/splitting unit 113 can be fully or partially compensated, because the test pattern 302 is inserted into all the contributing WDM channels. On the other hand, the OTDR test results may comprise ambiguities on fiber deteriorations due to the fact that the OTDR pulse responses involving a plurality of drop fibers 141, 142 are cumulated. Such ambiguities also arise in the context of GPON, where a specific wavelength is shared by a plurality of ONUs 151, 152 which are connected by a plurality of drop fibers 141, 142, respectively. Consequently, the OTDR test response comprises the backscattered light from the plurality of drop fibers 141, 142.

It should be noted that such ambiguities may be removed by combined modes of operation, i.e. by performing simultaneous OTDR testing of the WDM wavelengths in combination with sequential OTDR testing of the WDM wavelengths. The simultaneous OTDR tests would allow for tests with an increased power budget, whereas the sequential OTDR tests would allow for the removal of ambiguities.

The above aspects are not limited to WDM-PON systems 100 comprising a plurality of feeder fibers 121, 122. The described OTDR test setup may also be applied to WDM-PON systems which use a single fiber 121 for downstream WDM channels and for upstream WDM channels. An OLT transceiver 250, i.e. the OLT transmitting and receiving unit, may comprise the same components as the OLT transmitter 200. In addition, the tapping unit 230 may be configured to separate the downstream wavelengths λ₁,...,λ₈ from the upstream wavelengths λ₉,...,λ₁₆.

Furthermore, the OLT transceiver 250 may comprise a splitting unit 260 which is configured to split up the received wavelengths λ₉,...,λ₁₆ for the upstream communication. The splitting unit 260 may be implemented as a power splitter in combination with a wavelength filter and/or as a wavelength routing de-multiplexer. The received signals of the separated WDM wavelengths λ₉,...,λ₁₆ may be detected by a plurality of optical detection units 270, e.g. a plurality of photo-diodes.

In the present document, a system and method for performing OTDR testing in a WDM-PON network has been described. The proposed testing setup allows for an efficient and cost-effective implementation of OTDR testing for the different WDM wavelengths. Different modes of operation of the OTDR test setup have been described which may enable an unambiguous determination of fiber deteriorations on the feeder fibers and/or the drop fibers; and which may enable improved power budgets for OTDR testing.

It should be noted that the description and drawings merely illustrate the principles of the proposed methods and systems. It will thus be appreciated that those skilled in the art will be able to devise various arrangements that, although not explicitly described or shown herein, embody the principles of the invention. Furthermore, all examples recited herein are principally intended expressly to be only for pedagogical purposes to aid the reader in understanding the principles of the proposed methods and systems and the concepts contributed by the inventors to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

Furthermore, it should be noted that steps of various above-described methods and components of described systems can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

In addition, it should be noted that the functions of the various elements described in the present patent document may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included.

Finally, it should be noted that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

## Claims

1. A WDM-PON transmitter (200) configured to analyze an optical fiber (121), the transmitter (200) comprising
- a plurality of light sources (111, 112) configured to respectively generate a plurality of optical signals at different wavelengths;
- a multiplexing unit (113) configured to combine the plurality of optical signals for transmission over the optical fiber (121);
- a tapping unit (230) downstream of the multiplexing unit (113) configured to extract a backscattered optical signal from the fiber (121);
- a single optical receiver (240) configured to convert the backscattered optical signal into an electrical response signal;
- a test pattern scheduling unit (220) configured to generate an electrical test signal and to simultaneously pass the test signal to each of the plurality of light sources (111, 112) by means of at least one test pattern insertion unit (221, 222); and
- analysis means configured to analyze the electrical response signal; wherein the analysis means comprise a control and analysis unit (210) configured to
- receive the electrical response signal; wherein the response signal is associated with the test signal passed to the plurality of light sources (111, 112); and
- determine information associated with the fiber (121) based on the electrical test signal and the electrical response signal.

2. The WDM-PON transmitter (200) of claim 1, wherein
- the test signal comprises at least a pulse; and
- the response signal is associated with a pulse response of the fiber (121) to the pulse.

3. The WDM-PON transmitter (200) of any of claims 1 or 2, wherein
- the information associated with the fiber (121) comprises information on a location in the fiber (121) with changed refractive index.

4. The WDM-PON transmitter (200) of any of claims 1 to 3, wherein
- the test pattern scheduling unit (220) is further configured to sequentially pass the test signal to each of the plurality of light sources (111, 112); and
- the control and analysis unit (210) is further configured to receive a plurality of response signals respectively associated with the test signal passed to the plurality of light sources (111, 112).

5. The WDM-PON transmitter (200) of any of claims 1 to 4, further comprising a plurality of data signal units configured to provide a plurality of electrical data signals to be transmitted using the plurality of optical signals, respectively; wherein the at least one test pattern insertion unit (221, 222) is configured to modulate at least one of the plurality of electrical data signals with the test signal.

6. The WDM-PON transmitter (200) of any previous claim, wherein the tapping unit (230) is configured to extract a pre-determined fraction of the backscattered optical signal from the fiber (121).

7. A WDM-PON network, comprising
- a WDM-PON transmitter according to any of claims 1 to 6;
wherein the WDM-PON transmitter is configured to transmit a plurality of optical signals at different wavelengths;
- a feeder fiber (121);
- a plurality of drop fibers (141, 142); and
- a plurality of optical network units (151, 152), referred to as ONUs, connected to the feeder fiber (121) via the plurality of drop fibers (141, 142), respectively; wherein the plurality of ONUs (151,152) is configured to respectively receive the plurality of optical signals at different wavelengths.

8. The WDM-PON network according to claim 7, wherein the WDM-PON transmitter is configured to determine information on a location with changed refractive index in one of the plurality of drop fibers (141, 142).

9. A method for analyzing an optical fiber (121) of a WDM-PON network (100), the method comprising
- generating a plurality of optical signals at different wavelengths;
- generating an electrical test signal and simultaneously passing the test signal to each of the plurality of optical signals;
- combining the plurality of optical signals for transmission over the optical fiber (121) using a multiplexing unit (113);
- extracting a backscattered optical signal from the fiber (121) using a tapping unit (230) downstream of the multiplexing unit (113);
- converting the backscattered optical signal into an electrical response signal; and
- analyzing the electrical response signal; wherein analyzing comprises
- receiving the electrical response signal; wherein the response signal is associated with the test signal passed to the plurality of light sources (111, 112); and
- determining information associated with the fiber (121) based on the electrical test signal and the electrical response signal.

## Patentansprüche

1. WDM-PON-Sender (200), konfiguriert für das Analysieren einer optischen Faser (121), wobei der Sender (200) umfasst:
- eine Vielzahl von Lichtquellen (111, 112), konfiguriert für das Generieren jeweils einer Vielzahl optischer Signale mit unterschiedlichen Wellenlängen;
- eine Multiplex-Einheit (113), konfiguriert für das Kombinieren der Vielzahl optischer Signale für deren Übertragung über die optische Faser (121);
- eine der Multiplex-Einheit (113) nachgelagerte Abgriffseinheit (230), konfiguriert für das Extrahieren eines rückgestreuten optischen Signals aus der Faser (121);
- ein einzelner optischer Empfänger (240), konfiguriert für das Umwandeln des rückgestreuten optischen Signals in ein elektrisches Antwortsignal;
- eine Testmuster-Planungseinheit (220), konfiguriert für das Generieren eines elektrischen Testsignals und für das simultane Weiterreichen des Testsignals an jede aus der Vielzahl von Lichtquellen (111, 112) mittels mindestens einer Testmuster-Einfügungseinheit (221, 222); und
- Analysemittel, konfiguriert für das Analysieren des elektrischen Antwortsignals, wobei die Analysemittel eine Steuerungs- und Analyseeinheit (210) umfassen, die konfiguriert ist für
- das Empfangen des elektrischen Antwortsignals; wobei das Antwortsignal dem Testsignal zugeordnet ist, das an die Vielzahl von Lichtquellen (111, 112) weitergereicht wurde; und
- das Bestimmen von der Faser (121) zugeordneten Informationen auf der Grundlage des elektrischen Testsignals und des elektrischen Antwortsignals.

2. WDM-PON-Sender (200) nach Anspruch 1, wobei
- das Testsignal mindestens einen Impuls umfasst; und
- das Antwortsignal einer Impulsantwort der Faser (121) auf den Impuls zugeordnet ist.

3. WDM-PON-Sender (200) nach jeglichem der Ansprüche 1 bis 2, wobei
- die der Faser (121) zugeordneten Informationen Informationen zu einer Position in der Faser (121) mit verändertem Brechungsindex umfassen.

4. WDM-PON-Sender (200) nach jeglichem der Ansprüche 1 bis 3, wobei
- die Testmuster-Planungseinheit (220) weiterhin konfiguriert ist für das sequentielle Weiterreichen des Testsignals an jede aus der Vielzahl von Lichtquellen (111, 112); und
- die Steuerungs- und Analyseeinheit (210), weiterhin konfiguriert ist für den Empfang einer Vielzahl von Antwortsignalen, die jeweils dem zur Vielzahl von Lichtquellen (111, 112) weitergereichten Testsignal zugeordnet sind.

5. WDM-PON-Sender (200) nach einem jeglichen der Ansprüche 1 bis 4, weiterhin eine Vielzahl von Datensignaleinheiten umfassend, die dafür konfiguriert sind, um eine Vielzahl elektrischer Datensignale zur Übertragung jeweils durch die Vielzahl optischer Signale bereitzustellen; wobei die mindestens eine Testmuster-Einfügungseinheit (221, 222) konfiguriert ist für das Modulieren von mindestens einem aus der Vielzahl elektrischer Datensignale anhand des Testsignals.

6. WDM-PON-Sender (200) aus jeglichem der vorangehenden Ansprüche, wobei die Abgriffseinheit (230) konfiguriert ist für das Extrahieren eines vordefinierten Anteils des rückgestreuten optischen Signals aus der Faser (121).

7. WDM-PON-Netzwerk, umfassend:
- einen WDM-PON-Sender nach einem jeglichen der Ansprüche 1 bis 6;
wobei der WDM-PON-Sender konfiguriert ist für das Übermitteln einer Vielzahl optischer Signale von unterschiedlicher Wellenlänge;
- Eine Zubringer-Faser (121);
- eine Vielzahl von Drop-Fasern (141, 142); und
- eine Vielzahl optischer Netzwerkeinheiten (151, 152), im Weiteren ONU für Optical Network Unit, über die Vielzahl von Drop-Fasern (141, 142) jeweils verbunden mit der Zubringer-Faser (121); wobei die Vielzahl von ONUs (151, 152) konfiguriert ist für den Empfang optischer Signale von jeweils unterschiedlicher Wellenlänge.

8. WDM-PON nach Anspruch 7, wobei der WDM-PON-Sender konfiguriert ist für das Bestimmen von Informationen an einer Position mit verändertem Brechungsindex in einer aus der Vielzahl von Drop-Fasern (141, 142).

9. Verfahren für das Analysieren einer optischen Faser (121) eines WDM-PON-Netzwerks (100), wobei das Verfahren umfasst:
- Generieren einer Vielzahl von optischen Signalen von unterschiedlicher Wellenlänge;
- Generieren eines elektrischen Testsignals und das simultane Weiterreichen des Testsignals an jedes aus der Vielzahl optischer Signale;
- Kombinieren der Vielzahl optischer Signale für die Übermittlung über die optische Faser (121) unter Verwendung einer Multiplex-Einheit (113);
- Extrahieren eines rückgestreuten optischen Signals aus der Faser (121) unter Verwendung einer der Multiplex-Einheit (113) nachgelagerten Abgriffseinheit (230);
- Umwandeln des rückgestreuten optischen Signals in ein elektrisches Antwortsignal; und
- Analysieren des elektrischen Antwortsignals; wobei das Analysieren umfasst:
- das Empfangen des elektrischen Antwortsignals; wobei das Antwortsignal dem Testsignal zugeordnet ist, das an die Vielzahl von Lichtquellen (111, 112) weitergereicht wurde; und
- das Bestimmen von der Faser (121) zugeordneten Informationen auf der Grundlage des elektrischen Testsignals und des elektrischen Antwortsignals.

## Revendications

1. Émetteur WDM-PON (200) configuré pour analyser une fibre optique (121), l'émetteur (200) comprenant
- une pluralité de sources de lumière (111, 112) configurées pour générer respectivement une pluralité de signaux optiques à des longueurs d'onde différentes ;
- une unité de multiplexage (113) configurée pour combiner la pluralité de signaux optiques en vue de leur émission sur la fibre optique (121) ;
- une unité d'interception (230) en aval de l'unité de multiplexage (113) configurée pour extraire un signal optique rétrodiffusé depuis la fibre optique (121) ;
- un récepteur optique unique (240) configuré pour convertir le signal optique rétrodiffusé en un signal de réponse électrique ;
- une unité d'ordonnancement de motif d'essai (220) configurée pour générer un signal d'essai électrique et pour simultanément transférer le signal d'essai à chacune de la pluralité de sources de lumière (111, 112) par l'intermédiaire d'au moins une unité d'insertion de motif d'essai (221, 222) ; et
- des moyens d'analyse configurés pour analyser le signal de réponse électrique ; les moyens d'analyse comprenant une unité de commande et d'analyse (210) configurée pour
- recevoir le signal de réponse électrique ; le signal de réponse étant associé au signal d'essai transféré à la pluralité de sources de lumière (111, 112) ; et
- déterminer des informations associées à la fibre (121) en se basant sur le signal d'essai électrique et le signal de réponse électrique.

2. Émetteur WDM-PON (200) selon la revendication 1, avec lequel
- le signal d'essai comprend au moins une impulsion ; et
- le signal de réponse est associé à une réponse d'impulsion de la fibre (121) à l'impulsion.

3. Émetteur WDM-PON (200) selon l'une quelconque des revendications 1 ou 2, avec lequel
- les informations associées à la fibre (121) comprennent des informations sur un emplacement dans la fibre (121) avec un indice de réfraction modifié.

4. Émetteur WDM-PON (200) selon l'une quelconque des revendications 1 à 3, avec lequel
- l'unité d'ordonnancement de motif d'essai (220) est en outre configurée pour transférer séquentiellement le signal d'essai à chacune de la pluralité de sources de lumière (111, 112) ;
- l'unité de commande et d'analyse (210) est en outre configurée pour recevoir une pluralité de signaux de réponse respectivement associés au signal d'essai transféré à la pluralité de sources de lumière (111, 112).

5. Émetteur WDM-PON (200) selon l'une quelconque des revendications 1 à 4, comprenant en outre une pluralité d'unités de signal de données configurées pour délivrer une pluralité de signaux de données électriques à émettre en utilisant respectivement la pluralité de signaux optiques ; ladite au moins une unité d'insertion de motif d'essai (221, 222) étant configurée pour moduler au moins l'un parmi la pluralité de signaux de données électriques avec le signal d'essai.

6. Émetteur WDM-PON (200) selon l'une quelconque des revendications précédentes, avec lequel l'unité d'interception (230) est configurée pour extraire une fraction prédéterminée du signal optique rétrodiffusé de la fibre (121).

7. Réseau WDM-PON comprenant
- un émetteur WDM-PON selon l'une quelconque des revendications 1 à 6 ; l'émetteur WDM-PON étant configuré pour émettre une pluralité de signaux optiques à des longueurs d'onde différentes ;
- une fibre d'alimentation (121) ;
- une pluralité de fibres d'extraction (141, 142) ; et
- une pluralité d'unités de réseau optique (151, 152), désignées par ONU, connectées à la fibre d'alimentation respectivement par le biais de la pluralité de fibres d'extraction (141, 142) ; la pluralité d'ONU (51, 152) étant configurée pour recevoir respectivement la pluralité de signaux optique à des longueurs d'onde différentes.

8. Réseau WDM-PON selon la revendication 7, avec lequel l'émetteur WDM-PON est configuré pour déterminer des informations sur un emplacement avec un indice de réfraction modifié dans l'une de la pluralité de fibres d'extraction (141, 142).

9. Procédé d'analyse d'une fibre optique (121), d'un réseau WDM-PON (100), le procédé comprenant
- générer une pluralité de signaux optiques à des longueurs d'onde différentes ;
- générer un signal d'essai électrique et, simultanément, transférer le signal d'essai à chacun de la pluralité de signaux optiques ;
- combiner la pluralité de signaux optiques en vue de leur émission sur la fibre optique (121) en utilisant une unité de multiplexage (113) ;
- extraire un signal optique rétrodiffusé depuis la fibre optique (121) en utilisant une unité d'interception (230) en aval de l'unité de multiplexage (113) ;
- convertir le signal optique rétrodiffusé en un signal de réponse électrique ; et
- analyser le signal de réponse électrique ; l'analyse comprenant
- recevoir le signal de réponse électrique ; le signal de réponse étant associé au signal d'essai transféré à la pluralité de sources de lumière (111, 112) ; et
- déterminer des informations associées à la fibre (121) en se basant sur le signal d'essai électrique et le signal de réponse électrique.
